# EUROPÄISCHE PATENTSCHRIFT

(11) **EP 1 097 754 B1**
(45) Veröffentlichungstag und Bekanntmachung des Hinweises auf die Patenterteilung: **02.05.2007**
(21) Anmeldenummer: 00123089.5
(22) Anmeldetag: 25.10.2000
(51) Int. Cl.: B21B 38/06, B21B 41/10

(54) **Schlingenheber**
Loop lifter
Releveur de boucles

(30) Priorität: 05.11.1999 DE 19953524
(43) Veröffentlichungstag der Anmeldung: 09.05.2001
(73) Patentinhaber: SMS Demag AG, 40237 Düsseldorf (DE)
(72) Erfinder: Sudau, Peter, 57271 Hilchenbach (DE); Kipping, Matthias, 57562 Herdorf (DE); Tuschhoff, Matthias, Dr., 57072 Siegen (DE)
(74) Vertreter: Klüppel, Walter

(56) Entgegenhaltungen:
- WO-A-01/05530
- DE-A- 2 618 901
- DE-A- 2 633 351
- DE-A- 19 715 523
- JP-A- 52 120 946
- PATENT ABSTRACTS OF JAPAN vol. 001, no. 058 (E-024), 6. Juni 1977 (1977-06-06) -& JP 52 002580 A (ISHIKAWAJIMA HARIMA HEAVY IND CO LTD), 10. Januar 1977 (1977-01-10)
- CLARK M T ET AL: "DEVELOPMENT OF NEW HIGH PERFORMANCE LOOPERS FOR HOT STRIP MILLS" IRON AND STEEL ENGINEER, ASSOCIATION OF IRON AND STEEL ENGINEERS. PITTSBURGH, US, Bd. 74, Nr. 6, 1. Juni 1997 (1997-06-01), Seiten 64-70, XP000658416 ISSN: 0021-1559
- PATENT ABSTRACTS OF JAPAN vol. 006, no. 163 (M-152), 26. August 1982 (1982-08-26) -& JP 57 079014 A (ISHIKAWAJIMA HARIMA HEAVY IND CO LTD), 18. Mai 1982 (1982-05-18)

## Beschreibung

Die vorliegende Erfindung betrifft einen Schlingenheber zum Erfassen eines über eine Bandbreite verlaufenden Keilanteils eines in einem Band in Bandlängsrichtung herrschenden Längszuges.

Aus "Development of new high performance loopers for hot strip mills", Iron and Steel Engineer, June 1997, Seiten 64 bis 70, ist ein Schlingenheber bekannt, der zwei Kraftmesser zum Erfassen einer auf den Schlingenheber ausgeübten, mit dem Längszug korrespondierenden Kraft aufweist. Über die Anordnung der Kraftmesser und den übrigen Aufbau des Schlingenhebers ist dem genannten Fachaufsatz nichts zu entnehmen.

Aus der DE 197 15 523 A1 ist eine Planheitsmeßrolle bekannt, die eine Vielzahl von Meßrollen aufweist. Die Meßrollen sind einzeln in Schwenkarmen gelagert, die mit einer Schlingenheberwelle verbunden sind. Durch Verdrehen der Schlingenheberwelle sind die Meßrollen an das Band anstellbar. Die Schwenkarme sind durch Gelenke jeweils in einen Wellenteil und einen Rollenteil geteilt, wobei die Gelenke vom Band auf die Meßrollen ausgeübte, mit dem Längszug korrespondierende Rückstellkräfte auf je einen am jeweiligen Schwenkarm angeordneten Kraftmesser umlenken.

Die Aufgabe der vorliegenden Erfindung besteht darin, einen einfach aufgebauten Schlingenheber zu schaffen, mittels dessen ein über die Bandbreite verlaufender Keilanteil des Längszuges erfaßbar ist.

Die Aufgabe wird durch einen Schlingenheber gemäß Anspruch 1 gelöst.

Wenn der Rollenarm als Scheibe oder als Hebelrahmen ausgebildet ist, ist der Schlingenheber noch einfacher aufgebaut.

Wenn das Halteelement außerhalb des Dreiecks angeordnet ist, ist das Halteelement nur vergleichsweise niedrigen Kräften ausgesetzt.

Wenn das Dreieck als im wesentlichen gleichschenkeliges Dreieck ausgebildet ist, ergibt sich eine niedrige mechanische Belastung des Rollenarms.

Die Belastung des Rollenarms kann noch weiter minimiert werden, wenn das Dreieck als im wesentlichen rechtwinkeliges Dreieck ausgebildet ist.

Wenn eine der Seiten dem Gelenk gegenüberliegt und diese Seite länger als die beiden anderen Seiten ist, sind die auf den Rollenarm ausgeübten Kräfte besonders gering.

Wenn der Wellenarm mindestens so lang wie der Rollenarm ist, ergibt sich ein großer Anstellbereich des Schlingenhebers.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung
- Figur 1: eine perspektivische Ansicht einer Zugerfassungsanordnung,
- Figur 2: ein Band mit einem Schlingenheber von oben und
- Figur 3: den Schlingenheber von Figur 2 von der Seite.

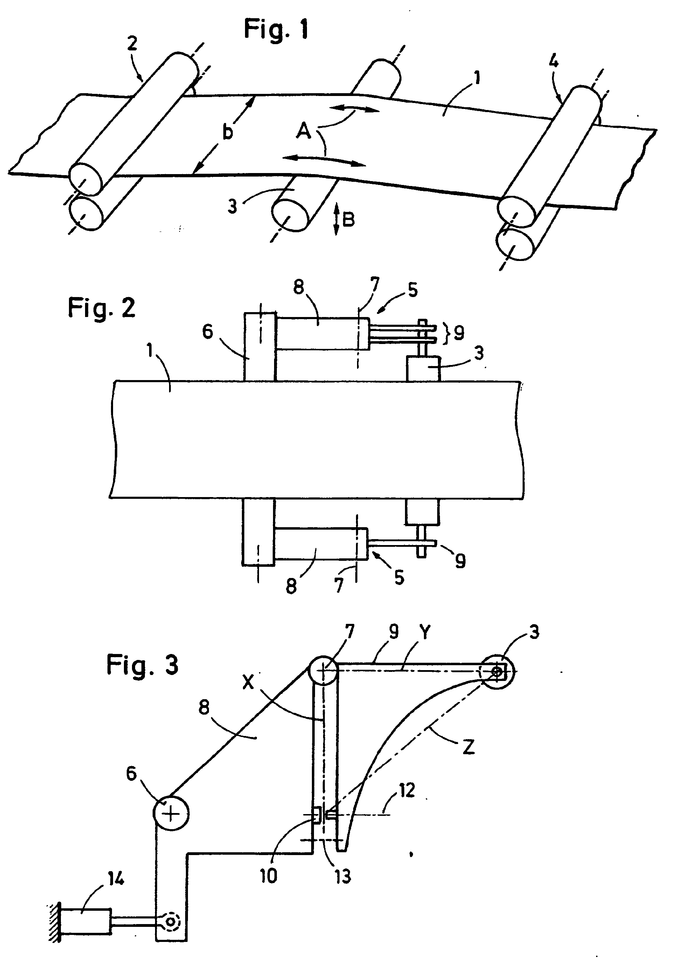

Gemäß Figur 1 wird ein Metallband 1 von einer Auslaufeinrichtung 2 über eine Schlingenheberrolle 3 zu einer Einlaufeinrichtung 4 geführt. Die Auslaufeinrichtung 2 und die Einlaufeinrichtung 4 können z. B. als Walzgerüste oder Treiber ausgebildet sein. Das Metallband 1 ist vorzugsweise ein warm- oder kaltgewalztes Stahlband. Es weist eine Bandbreite b auf. Die Schlingenheberrolle 3 ist gemäß Figur 1 als durchgehende Schlingenheberrolle ausgebildet. Sie erstreckt sich über die gesamte Bandbreite b.

Im Metallband 1 herrscht in Bandlängsrichtung ein Längszug, was in Figur 1 durch Pfeile A angedeutet ist. Der Längszug weist über der Bandbreite b einen Keilanteil auf, was in Figur 1 durch die unterschiedliche Größe der Pfeile A angedeutet ist. Die Schlingenheberrolle 3 ist an das Metallband 1 anstellbar. Dies ist in Figur 1 durch einen Pfeil B angedeutet.

Gemäß Figur 2 ist die Schlingenheberrolle 3 auf beiden Seiten in je einem Schwenkarm 5 gelagert. Die Schwenkarme 5 sind mit einer Schlingenheberwelle 6 verbunden. Somit ist durch Verdrehen der Schlingenheberwelle 6 die Schlingenheberrolle 3 an das Metallband 1 anstellbar.

Die Schwenkarme 5 sind jeweils durch ein Gelenk 7 in einen Wellenarm 8 und einen Rollenarm 9 geteilt. Gemäß Figur 2 sind die Rollenarme 9 als Scheibe bzw. als Hebelrahmen ausgebildet. Als Scheibe wird dabei ein massives Tragelement bezeichnet, wohingegen unter einem Hebelrahmen ein Tragelement zu verstehen ist, das zwei voneinander durch einen Zwischenraum getrennte Scheiben aufweist. Ergänzend sei erwähnt, daß in der Praxis beide Rollenarme 9 in der Regel gleich ausgebildet sind. Die unterschiedliche Darstellung der Rollenarme 9 in Figur 2 dient lediglich der Veranschaulichung.

Gemäß Figur 3 ist bei jedem Schwenkarm 5 am Wellenarm 8 ein Kraftmesser 10 angeordnet, der am Rollenarm 9 anliegt. Der Kraftmesser 10 ist bezüglich des Gelenks 7 exzentrisch angeordnet. Das Gelenk 7 lenkt somit eine vom Metallband 1 auf die Schlingenheberrolle 3 ausgeübte Rückstellkraft auf den am jeweiligen Wellenarm 8 angeordneten Kraftmesser 10 um.

Die Rückstellkraft korrespondiert mit dem Längszug. Aus den gemessenen Rückstellkräften kann daher der Längszug ermittelt werden. Dabei wird für jeden der beiden Kraftmesser 10 der beiden Schwenkarme 5 aus der auf ihn ausgeübten Rückstellkraft ein eigener Längszug ermittelt. Die Summe der beiden so ermittelten Längszüge ergibt den im Metallband 1 herrschenden Gesamt-Längszug. Die Differenz der beiden so ermittelten Längszüge ergibt den Keilanteil, den der Längszug über der Bandbreite b aufweist.

Sowohl aufgrund des Gesamt-Längszuges als auch aufgrund des Keilanteils können die Auslaufeinrichtung 2 und/oder die Einlaufeinrichtung 4 nachgeregelt werden. Beispielsweise ist es möglich, aufgrund des Gesamt-Längszuges die Drehzahl und aufgrund des Keilanteils mindestens eine Anstellung mindestens einer der beiden Einrichtungen 2, 4 nachzuregeln.

Gemäß Figur 3 bilden das Gelenk 7, die Schlingenheberrolle 3 und der Kraftmesser 10 ein Dreieck mit drei Seiten X, Y und Z. Die Angaben "Gelenk 7" und "Schlingenheberrolle 3" sind dabei auf deren Drehachsen bezogen, die Angabe "Kraftmesser 10" auf den Berührpunkt zum Rollenarm 9.

Ersichtlich ist das Dreieck als im wesentlichen rechtwinkeliges, im wesentlichen gleichschenkeliges Dreieck ausgebildet. Die Hypotenuse Z des Dreiecks liegt dabei dem Gelenk 7 gegenüber. Diese Seite Z ist also länger als die beiden anderen Seiten X, Y. "Im wesentlichen" heißt dabei, daß der "rechte" Winkel des Dreiecks zwischen 80° und 100° liegt und die Längen der beiden gleichen Schenkel des Dreiecks um maximal 10 % differieren.

Der Kraftmesser 10 weist eine Kraftachse 12 auf. Der Kraftmesser 10 erfaßt also nur Kräfte, die parallel zur Kraftachse 12 gerichtet sind. Der Rollenarm 9 ist derart ausgebildet, daß er im Bereich des Kraftmessers 10 eine Bewegung ausführt, die im wesentlichen parallel zur Kraftachse 12 gerichtet ist. "Im wesentlichen" bedeutet dabei, daß die Bewegungsrichtung des Rollenarms 9 mit der Kraftachse 12 einen Winkel von maximal 10° bildet.

In der Nähe des Kraftmessers 10, aber außerhalb des Dreiecks ist ein Halteelement 13 angeordnet. Mittels des Halteelements 13 sind der Wellenarm 7 und der Rollenarm 8 miteinander verbunden. Dadurch wird ein Abheben des Rollenarms 8 vom Kraftmesser 10 verhindert.

Der Wellenarm 8 ist mindestens so lang wie der Rollenarm 9 ist. Gemäß Figur 3 ist er sogar länger als der Rollenarm 9, und zwar um 20% bis 100 % länger. Die Länge des Wellenarms 8 ist dabei durch den Abstand der Drehachse der Schlingenheberwelle 6 von der Drehachse des Gelenks 7 gegeben. Die Länge des Rollenarms 9 ist durch den Abstand der Drehachse der Schlingenheberrolle 3 von der Drehachse des Gelenks 7 gegeben.

Aufgrund der vergleichsweise großen Länge des Wellenarms 8 ergibt sich beim Verdrehen der Schlingenheberwelle 6 ein großer Anstellbereich des Schlingenhebers. Das Verdrehen der Schlingenheberwelle 6 erfolgt dabei mittels eines Anstellantriebes 14. Der Anstellantrieb 14 kann gemäß Figur 3 beispielsweise als exzentrisch angreifende Hydraulikzylindereinheit ausgebildet sein.

Mit dem Schlingenheber der vorliegenden Erfindung ist auf einfache Weise ein zuverlässiges Erfassen sowohl des Gesamt-längszuges als auch des über die Bandbreite b verlaufenden Keilanteils des in dem Metallband 1 herrschenden Längszuges möglich. Der Aufbau des Schlingenhebers ist dabei einfach, robust und störunanfällig. Insbesondere ist es nicht erforderlich, die Schlingenheberrolle 3 zu segmentieren und jedem einzelnen Segment einen Kraftmesser zuzuordnen.

### Bezugszeichenliste

- 1: Metallband
- 2: Auslaufeinrichtung
- 3: Schlingenheberrolle
- 4: Einlaufeinrichtung
- 5: Schwenkarme
- 6: Schlingenheberwelle
- 7: Gelenk
- 8: Wellenarm
- 9: Rollenarm
- 10: Kraftmesser
- 12: Kraftachse
- 13: Halteelement
- 14: Anstellantrieb

- A, B: Pfeile
- b: Bandbreite
- X, Y, Z: Seiten

## Patentansprüche

1. Schlingenheber zum Erfassen eines über eine Bandbreite (b) verlaufenden Keilanteils eines in einem Band (1) in Bandlängsrichtung herrschenden Längszuges, mit einer durchgehenden, sich über die Bandbreite (b) erstreckenden Schlingenheberrolle (3), die auf beiden Seiten in je einem Schwenkarm (5) gelagert ist, wobei die Schwenkarme (5) mit einer Schlingenheberwelle (6) verbunden sind, wobei durch Verdrehen der Schlingenheberwelle (6) die Schlingenheberrolle (3) an das Band (1) anstellbar ist, wobei die Schwenkarme (5) jeweils durch ein Gelenk (7) in einen Wellenarm (8) und einen Rollenarm (9) geteilt sind und wobei das Gelenk (7) eine vom Band (1) auf die Schlingenheberrolle (3) ausgeübte, mit dem Längszug korrespondierende Rückstellkraft auf je einen am jeweiligen Schwenkarm (5) angeordneten Kraftmesser (10) umlenkt, wobei das Gelenk (7), die Schlingenheberrolle (3) und der Kraftmesser (10) ein Dreieck mit drei Seiten (X, Y, Z) bilden, wobei der Kraftmesser (10) eine Kraftachse (12) aufweist und dass der Rollenarm (9) im Bereich des Kraftmessers (10) eine Bewegung ausführt, die im wesentlichen parallel zur Kraftachse (12) gerichtet ist, wobei der Wellenarm (8) und der Rollenarm (9) zum Verhindern eines Abhebens des Rollenarms (9) vom Kraftmesser (10) in der Nähe des Kraftmessers (10) durch ein Halteelement (13) miteinander verbunden sind und
die Schlingenheberwelle (6) mit einem exzentrisch angreifenden Anstellantrieb (14) ausgebildet ist.

2. Schlingenheber nach Anspruch 1,
**dadurch gekennzeichnet,**
**dass** der Rollenarm (9) als Scheibe oder als Hebelrahmen ausgebildet ist.

3. Schlingenheber nach Anspruch 1,
**dadurch gekennzeichnet,**
**dass** das Halteelement (13) außerhalb des Dreiecks angeordnet ist.

4. Schlingenheber nach Anspruch 1,
**dadurch gekennzeichnet,**
**dass** das Dreieck als im wesentlichen gleichschenkeliges Dreieck ausgebildet ist.

5. Schlingenheber nach Anspruch 4,
**dadurch gekennzeichnet,**
**dass** das Dreieck als rechtwinkeliges Dreieck ausgebildet ist.

6. Schlingenheber nach einem der Ansprüche 1 bis 5,
**dadurch gekennzeichnet,**
**dass** eine der Seiten (Z) dem Gelenk (7) gegenüberliegt und diese Seite (Z) länger als die beiden anderen Seiten (X, Y) ist.

7. Schlingenheber nach Anspruch 1,
**dadurch gekennzeichnet,**
**dass** der Wellenarm (8) mindestens so lang wie der Rollenarm (9) ist.

## Claims

1. Loop lifter for detecting a wedge component, which extends over a strip width (b), of a longitudinal tension prevailing in a strip (1) in strip longitudinal direction, with a continuous loop lifting roller (3), which extends over the strip width (b) and which is mounted at each end in a respective pivot arm (5), wherein the pivot arms (5) are connected with a loop lifter shaft (6), wherein the loop lifter roller (3) is placeable against the strip (1) by rotation of the loop lifter shaft (6), wherein the pivot arms (5) are each divided by a joint (7) into a shaft arm (8) and a roller arm (9) and wherein the joint (7) diverts a restoring force, which is exerted by the strip (1) on the loop lifter roller (3) and which corresponds with the longitudinal tension, to a force measuring device (10) arranged at the respective pivot arm (5), wherein the joint (7), the loop lifter roller (3) and the force measuring device (10) form a triangle with three sides (X, Y, Z), wherein the force measuring device (10) has a force axis (12) and that the roller arm (9) in the region of the force measuring device (10) executes a movement directed substantially parallel to the force axis (12), wherein the shaft arm (8) and the roller arm (9) are interconnected by a retaining element (13) for preventing lifting of the roller arm (9) from the force measuring device (9) in the vicinity of the force measuring device (10) and the loop lifter shaft (6) is constructed with an eccentrically engaging adjusting drive (14).

2. Loop lifter according to claim 1, **characterised in that** the roller arm (9) is constructed as a disc or as a lever frame.

3. Loop lifter according to claim 1, **characterised in that** the retaining element (13) is arranged outside the triangle.

4. Loop lifter according to claim 1, **characterised in that** the triangle is constructed as a substantially equilateral triangle.

5. Loop lifter according to claim 4, **characterised in that** the triangle is constructed as a right-angle triangle.

6. Loop lifter according to one of claims 1 to 5, **characterised in that** one of the sides (Z) is opposite the joint (7) and this side (Z) is longer than the two other sides (X, Y).

7. Loop lifter according to claim 1, **characterised in that** the shaft arm (8) is at least as long as the roller arm (9).

## Revendications

1. Releveur de boucle pour saisir la proportion en biais s'étendant sur une largeur de bande (b) d'une traction longitudinale qui règne dans une bande (1) dans le sens longitudinal de celle-ci, avec un rouleau releveur de boucle (3) continu, s'étendant sur la largeur de la bande (b), qui est logé des deux côtés dans un bras de pivotement (5), les bras de pivotement (5) étant reliés à un arbre releveur de boucle (6), le rouleau releveur de boucle (3) pouvant être placé contre la bande (1) par rotation de l'arbre releveur de boucle (6), les bras de pivotement (5) étant à chaque fois divisés par une articulation (7) en un bras d'arbre (8) et un bras de rouleau (9) et l'articulation (7) déviant une force de rappel exercée par la bande (1) sur le rouleau releveur de boucle (3) correspondant à la traction longitudinale sur à chaque fois un dispositif de mesure de la force (10) disposé sur chaque bras de pivotement (5), l'articulation (7), le rouleau releveur de boucle (3) et le dispositif de mesure de la force (10) formant un triangle avec trois côtés (X, Y, Z), le dispositif de mesure de la force (10) présentant un axe de force (12) et le bras de rouleau (9) exerçant un mouvement au niveau du dispositif de mesure de la force (10) qui est essentiellement parallèle à l'axe de force (12), le bras d'arbre (8) et le bras de rouleau (9) étant reliés l'un à l'autre pour éviter un soulèvement du bras de rouleau (9) du dispositif de mesure de la force (10) à proximité du dispositif de mesure de la force (10) par un élément de maintien (13) et l'arbre releveur de boucle (6) étant réalisé avec un dispositif d'entraînement (14) s'agrippant excentriquement.

2. Releveur de boucle selon la revendication 1, **caractérisé en ce que** le bras de rouleau (9) est réalisé sous forme d'un disque ou d'un cadre à levier.

3. Releveur de boucle selon la revendication 1, **caractérisé en ce que** l'élément de maintien (13) est disposé en dehors du triangle.

4. Releveur de boucle selon la revendication 1, **caractérisé en ce que** le triangle est réalisé sous forme d'un triangle essentiellement isocèle.

5. Releveur de boucle selon la revendication 4, **caractérisé en ce que** le triangle est réalisé sous forme d'un triangle rectangle.

6. Releveur de boucle selon l'une quelconque des revendications 1 à 5, **caractérisé en ce qu'**un des côtés (Z) se trouve face à l'articulation (7) et ce côté (Z) est plus long que les deux autres côtés (X, Y).

7. Releveur de boucle selon la revendication 1, **caractérisé en ce que** le bras d'arbre (8) est au moins aussi long que le bras de rouleau (9).
